(19) Europäisches Patentamt
European Patent Office
Office européen des brevets

(11) Publication number: 0 104 790 B1

(12) # EUROPEAN PATENT SPECIFICATION

(45) Date of publication of patent specification: **14.01.87**

(51) Int. Cl.$^4$: **F 16 L 59/06**, F 16 L 9/18, E 21 B 36/00

(21) Application number: **83305015.6**

(22) Date of filing: **31.08.83**

(54) **Apparatus for the delivery of hot fluids and methods of maintaining a vacuum in such apparatus.**

(30) Priority: **31.08.82 US 413285**

(43) Date of publication of application: **04.04.84 Bulletin 84/14**

(45) Publication of the grant of the patent: **14.01.87 Bulletin 87/03**

(84) Designated Contracting States: **AT BE CH DE FR GB IT LI LU NL SE**

(56) References cited:
**US-A-3 680 631**
**US-A-3 763 935**

**W. ESPE "Werkstoffkunde der Hochvakuumtechnik" 1959, DEUTSCHER VERLAG DER WISSENSCHAFTEN, Berlin**

(73) Proprietor: **THE BABCOCK & WILCOX COMPANY**
**1010 Common Street P.O. Box 60035**
**New Orleans Louisiana 70160 (US)**

(72) Inventor: **Ayres, Paul S.**
**1657 Denwood Street**
**Alliance Ohio 44601 (US)**
Inventor: **Chen, Chou-Ming**
**5262 Tanglewood Drive**
**Louisville Ohio 44641 (US)**
Inventor: **Ziels, Burton D.**
**2284 Scenic Drive**
**Northeast Lancaster Ohio 43130 (US)**

(74) Representative: **Cotter, Ivan John et al**
**D. YOUNG & CO. 10 Staple Inn**
**London WC1V 7RD (GB)**

**EP 0 104 790 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to apparatus for the delivery of hot fluids and methods of maintaining a vacuum in such apparatus.

Heavy oil and tar sands represent huge untapped resources of liquid hydrocarbons which will be produced in increasing quantities to help supplement declining production of conventional crude oil. The deposits must, however, be heated to reduce the oil viscosity before the oil will flow to the producing wells in economical quantities. A dominant method of heating is by injection of surface generated steam in either a continuous (steam flood) or intermittent (steam stimulation of "huff and puff") mode.

When steam is injected down long injection pipes or "strings", a significant amount of thermal energy is lost to the rock overburden (150 to 2130 m or 500 to 7,000 feet) which covers the oil deposits if the strings are not properly insulated. In initial steam injection projects, the price of oil did not justify the prevention of this heat loss, but with the price of oil at $30 or more a barrel, insulation systems for the well injection pipe have become economically justified.

It is known to use insulated steam injection tubing for the injection of steam into oil wells and the prevention of excessive heat loss.

Tubing of the insulated steam injection type is formed of coaxial inner and outer tubulars members (hereinafter also referred to as "tubulars") that are connected together whereby an annular space is formed therebetween. The annular spaces are typically insulated by products such as fibre and layered insulation with air or inert gas typically in the annular spaces.

The provision of a vacuum within an annular space between inner and outer tubulars is disclosed in US Patent No. 3 680 631 to *Allen et al* and US Patent No. 3 763 935 to *Perkins*. Both of these references deal with the conveyance of warm fluid, such as oil, over cool environments such as permafrost zones, wherein the fluid, specifically liquid petroleum, is to be conveyed typically at a temperatures of 71°C (160°F).

Both of these patents suggest the use of special coatings, such as nickel or chromium alloy coatings, on the tubular surfaces to reduce gas diffusion into the space so that the vacuum which is originally established in the annular space can be maintained. Both patents generally suggest the use of a getter material for absorbing gases which may invade the annular space.

While the problem of gases diffusing or leaking into an evacuated annular space of a double walled tube is treated generally in the *Allen et al* and *Perkins* patents, neither of these patents addresses additional problems which are faced in the rugged environment of an oil well undergoing steam injection. The outer surfaces of the outer tubular in such an environment are exposed to corrosive water under pressure, which pressure increases with well depth. The tubing is generally made of carbon steel, for economic reasons, and the corrosive environment drastically increases the generation of nascent hydrogen that permeates the outer tubular wall, in particular at the greatly increased pressures encountered in typical water depths of 1200 to 1800 m (4000 to 6000 ft) or more.

In addition, under the high temperature conditions of the inner tubular, the outgassing of objectionable gases such as oxygen, carbon monoxide, hydrogen, and nitrogen into the annular space increases in the order of an estimated ten times or more over the outgassing rate when the fluid in the inner tubular is at a temperature of merely 71°C (160°F). Again, for economic reasons, the inner tubular should normally be made of relatively inexpensive metals such as carbon steel. While baking is known for the purposes of outgassing the surface of such steel, it is estimated that sufficient degassing of the inner tubular would require a temperature of 982°C (1800°F) for a period of about a day. Such processing is generally impractical, however.

During the life of an insulated steam injection tubing, which is estimated to be at least five years, an increase in hydrogen partial pressure within the annular space of up to about 533 Pa (four torr) can be expected due to hydrogen diffusion. An increase in partial pressure from other active gases of 13.332 Pa (100 torr) can be expected from outgassing of the inner tubular. Such increases in pressure defeat the insulating function of the annular space. Although partial pressures of other gases of up to 13.3 Pa (0.1 torr) can normally be tolerated, a partial pressure above 1.33 Pa (0.01 torr) cannot normally be tolerated for hydrogen due to its greater mobility.

In an article entitled *New Double-Walled Tubulars Can Aid Thermal-Recovery Operations*, B.V. Traynor, Oil and Gas Journal February 18, 1980, the problems of insulating the annular spaces of double-walled tubing in a rugged oil well environment are discussed on p. 106. It is noted that the use of a vacuum in the annular space for insulation purposes was found to be economically impractical so that the vacuum approach has been abandoned.

According to the present invention there is provided apparatus for the delivery of hot fluids, for example to a well, the apparatus comprising:

an inner tubular member having an inner space for conveying fluids;

an outer tubular member disposed around the inner tubular member and defining an annular space therewith;

insulation disposed in the annular space;

means for connecting the inner and outer tubular members, the annular space being closed to atmospheric pressure and a vacuum being established in the closed annular space; and

a getter material for absorbing at least one active gas in the closed annular space;

characterised in that:

the inner tubular member is capable of conveying fluids at a temperature within a range of 204°C (400°F) to 371°C (700°F); and

the getter material is activated at an elevated temperature within the temperature range and is disposed adjacent an outer surface of the inner tubular member between the outer surface and the insulation in the closed annular space, the getter material including one of a group consisting of titanium, an alloy of titanium, zirconium, and an alloy of zirconium.

The invention also provides a method of maintaining a vacuum in an annular space of a tubular apparatus formed of an inner tubular member for carrying fluids and an outer tubular member connected to the inner tubular by connector means to form the annular space between the inner and outer tubular members, the method comprising:

providing in the annular space a getter material for absorbing at least one active gas which permeates into the annular space;

providing insulation in the annular space; and

closing the annular space to atmospheric pressure to establish a vacuum therein;

characterised in that:

the inner tubular member is capable of conveying fluids at a temperature within a range of 204°C (400°F) to 371°C (700°F);

the getter material is activatable at an elevated temperature within the temperature range to absorb active gases which pass into the annular space through hydrogen permeation of the outer tubular member due to corrosion of the outer tubular member and through outgassing of the inner tubular member due to the elevated temperature of the inner tubular member;

the getter material is disposed adjacent an outer surface of the inner tubular member between the outer surface and the insulation in the closed annular space; and

the getter material is selected from a group consisting of titanium, an alloy of titanium, zirconium, and an alloy of zirconium.

Preferred embodiments of the present invention described in detail hereinbelow provide a solution to the problems of maintaining a vacuum in the annular spaces of tubing apparatus having inner and outer tubulars and used to inject steam into an oil well. To this end, getter material is placed in the annular space during assembly of the tubulars. The getter material is positioned adjacent the outer surface of the inner tubular, which will achieve a high temperature during service. This increases the capacity and pumping speed of the getter material. The inner and outer tubulars are assembled using connecter means such as plates which are welded to the tubulars whereby the annular space is provided therebetween. The space is sealed and evacuated. The getter material is simply and automatically activated by heating when the tubing apparatus is utilised for steam injection.

The preferred embodiments of the present invention described hereinbelow provide a tubular apparatus in which an acceptable vacuum may be maintained in the annular space when the inner tubular is made of material which releases at least one active gas by outgassing, which outgassing is increased with elevated temperatures.

The preferred embodiments also provide tubular apparatus in which an acceptable vacuum may be maintained in the annular space when the outer tubular is made of material which corrodes in a corrosive environment of a well to generate nascent hydrogen which penetrates the outer tubular and enters the annular space.

The preferred embodiments advantageously can help avoid the use of costly corrosion resistant materials as coatings for the inner and outer tubulars.

The use of titanium or zirconium as the getter material is advantageous for absorbing hydrogen gas.

The preferred embodiments provide a tubular apparatus for the delivery of steam to a well in which a vacuum environment used for insulation is maintained within desired limits throughout the life of the tubular apparatus, and which is simply designed, rugged in construction, and economical to manufacture.

The invention will now be further described, by way of illustrative and non-limiting example, with reference to the accompanying drawing, in which:

Figure 1 is a longitudinal sectional view of insulated steam injection tubing or tubing apparatus embodying the invention; and

Figure 2 is a cross-sectional view of another insulated steam injection tubing embodying the invention.

The drawing shows an insulated hot fluid injection tube or tubing apparatus 10 which can be assembled with other similar tubing to form a string which is lowered into an oil well for the purposes of injecting steam or other hot fluids therein. The tubing apparatus 10 is typically about 12 m (40 ft) in length and comprises an outer tubular member (also referred to hereinafter as a "tubular") 12 disposed around an inner tubular 14 and defining therewith an annular space 16. The annular space 16, as shown at Figure 1, can be provided with multi-layered insulation 18 wrapped around an outer surface 20 of the inner tubular 14, or, as shown in Figure 2, fibrous insulation 22. However, other suitable insulation may be used. Connecting means such as flanged connecting members 24 and 26 are connected, preferably welded, between the inner and outer tubulars 14 and 12 at axially spaced locations. In addition to connecting the inner and outer tubulars 14 and 12, the members 24 and 26 may serve advantageously to seal the annular space 16. A fluid supply device 34 may be connected to the tubing apparatus 10 by means of a line schematically illustrated at 36 to supply steam or other hot fluid to the tubing. The device 34 may be of any type known in the art for that purpose, and such devices are commonly known to those of

ordinary skill in the art to which this invention pertains.

The annular space 16 is evacuated in known fashion to a level preferably at or below 0.133 Pa ($10^{-3}$ torr).

With an estimated service life of about five years or longer, it is desired that this level of vacuum be maintained at or below 13.3 Pa (0.1 torr) including a partial pressure below 1.33 Pa (0.01 torr) for hydrogen. Above these pressures, the thermal insulating function of the annular space 16 is degraded. This is due, in the case of hydrogen, to the light weight and fast movement of hydrogen molecules that undesirably transfer heat from the inner tunular 14 to the outer tubular 12. The vacuum, as noted above, also deteriorates due to outgassing of active gases such as oxygen, nitrogen, hydrogen, and carbon monoxide from the material of the tubulars 14 and 12, in particular the inner tubular 14 which is exposed to steam conducted in its inner space 28, which inner tubular is typically at a temperature of about 343°C (650°F) and generally within a temperature range of 204 to 371°C (400 to 700°F).

As will be discussed in greater detail hereafter, during the service life of a tubing apparatus 10, the atmosphere within the annular space 16 can be expected to increase by up to about 533 Pa (four torr) due to diffusing hydrogen generated by corrosion, and by about 13,332 Pa (100 torr) due to outgassing of gases from the hot inner tubular 14. Thus, even without otherwise mechanical leakage of gases into the annular space which may occur, the upper limit at a total pressure of 13.3 Pa (0.1 torr) and a hydrogen partial pressure of 1.33 Pa (0.01 torr) for the annular space 16 is far exceeded.

To eliminate such undesirable active gases from the annular space 16, a getter material 30 is provided within the annular space 16 adjacent the outer surface 20 of the inner tubular 14. In this location, the getter material 30, which is activatable by heat of steam in the space 28, absorbs both hydrogen permeating through the outer tubular wall and gases outgassed from the inner tubular 14. To increase the surface area of the getter material 30, the getter material can, for example, advantageously be of a sponge form which is a form providing a large surface area and is commonly known to those of ordinary skill in the art to which this invention pertains, or it may be provided on a corrugated metal strip, shown at 32 in Figure 2, that surrounds and is adjacent the outer surface of the inner tubular 14. The corrugated strip 32 may, for example, be iron or another metallic alloy, with the getter material formed in a coating on the strip.

The getter material is titanium, an alloy of titanium, zirconium or an alloy of zirconium for absorption of hydrogen as well as other active gases. Getter material such as aluminium may be added for absorbing other active gases. These getter materials may be activated, or increased in activity at elevated temperatures, typically the temperatures within the space 28, to absorb the objectionable active gases that would otherwise migrate into the space 16.

In this way, relatively inexpensive mild carbon steel can be used for constructing inner and outer tubulars without corrosion resistant diffusion coatings such as chromium or nickel plating or stainless steel. This results in significant "savings" in manufacture of the tubing apparatus 10 while at the same time maintaining a sufficient vacuum insulation during its service life.

While the tubing apparatus is primarily useful in the rugged environments of an oil well for oil recovery, the tubing apparatus is also useful in other similarly rugged environments such as those of oil-coal slurry transportation and steam and high pressure hot water circulation in geothermal wells.

In calculating the amount of hydrogen which may permeate into the annular space 16, an outer surface of the outer tubular 12 is assumed to have an area of 91.6 $cm^2$ per cm (232.7 $cm^2$ per in) of tube length. The water volume in the annular space between the well casing (not shown in Figure 1) and the insulated tube is assumed to be 145.61 $cm^3$ per cm (369.86 $cm^3$ per in) of the tube length. The volume of the evacuated space 16 in the insulated tube is assumed to be 52.46 $cm^3$ per cm (133.27 $cm^3$ per inch) of the tube length. These figures are based on typical sizes for the inner and outer tubulars 14 and 12.

The density of carbon steel, of a type advantageously used in apparatus embodying the invention is 7.86 $g/cm^3$.

A corrosion mechanism in acid or alkali solution is as follows:

$$Fe \rightarrow Fe^{2+} + 2e\text{: anodic reaction}$$

$$2H^{+} + 2e \rightarrow H_2 \text{ (gas): cathodic reaction}$$

Corrosion of 1 g-ion of Fe (55,85 g) evolves 1 g-mole of $H_2$.

In addition to the above, the following assumptions are made:

Corrosion rate of carbon steel: 0.0254 mm/year (1 mil/year)

Outer surface area of the insulated tube: 35.89 $cm^2$ per cm (91.16 $cm^2$ per in) of tube.

Inner surface area (exposed to steam) of the inner tubular: 18.94 $cm^2$ per cm (48.12 $cm^2$ per in) of tubular.

Wall thickness of the outer tubular: 0.635 cm.

Wall thickness of inner tubular: 0.483 cm.

The permeation coefficient U can be calculated according to the equation

$U=U_oe(-K/RT)$ where

$U_o=8.90\times10^{-6}$ $cm^3/cm\text{-}sec\text{-}Pa^{1/2}$ ($2.83\times10^{-3}$ $cm^3/cm\text{-}sec\text{-}atm^{1/2}$),
K=35,200 J/g-mole (8,400 cal/g-mole),
R=the universal gas constant, and
T=temperature in Kelvins.

At temperatures of 66, 204 and 343°C (150, 400 and 650°F), the permeation coefficient U is found to be as follows:

$U_{66}$ degrees $C=3.5\times10^{-11}$ $cm^3/cm\text{-}sec\text{-}Pa^{1/2}$ ($1.1\times10^{-8}$ $cm^3/cm\text{-}sec\text{-}atm^{1/2}$)
$U_{204}$ degrees $C=1.3\times10^{-9}$ $cm^3/cm\text{-}sec\text{-}Pa^{1/2}$ ($4.1\times10^{-7}$ $cm^3/cm\text{-}sec\text{-}atm^{1/2}$)
$U_{343}$ degrees $C=9.27\times10^{-9}$ $cm^3/cm\text{-}sec\text{-}Pa^{1/2}$ ($2.95\times10^{-6}$ $cm^3/cm\text{-}sec\text{-}atm^{1/2}$)

The hydrogen partial pressure in the steam side of the inner insulated tubular 14 is assumed to be zero. With $Q_1$ being the hydrogen flux from water to the vacuum space of the insulated tube, and $Q_2$ being the hydrogen flux from the vacuum space of the insulated tube to the steam, the steady state condition is $Q_1=Q_2$.
Q is calculated according to the following equation:

$$Q=\frac{A\cdot U\cdot P^{1/2}}{t}(cm^3/sec)$$ where

A=surface area in $cm^2$,
P=the difference in pressure in pascals (atmospheres) between the inside and outside of a tubular, and
t=thickness in cm of the tubular wall.

Based on the above assumption, and setting $Q_1=Q_2$, the partial pressure of hydrogen in the vacuum space of the insulated tube under steady-state conditions is estimated for an inner tubular temperature in the range of 204 to 353°C (400 to 650°F) to be as listed in Table I or greater.

TABLE I:
Hydrogen partial pressure as a function of distance below water surface

| Depth in m (ft) | $H_2$ Partial pressure in Pa (Torr) |
|---|---|
| 0 | 2.80 ($2.1\times10^{-2}$) |
| 152 (500) | 42.6 ($3.2\times10^{-1}$) |
| 305 (1000) | 85.3 ($6.4\times10^{-1}$) |
| 610 (2000) | 169 (1.27) |
| 1220 (4000) | 340 (2.55) |
| 1830 (6000) | 509 (3.82) |

From this table, it may be observed that the annulus pressure due to permeation of hydrogen into the annulus under steady-state conditions is unacceptably high (above 1.33 Pa (0.01 torr)), even at the water surface, if an effective means is not provided for absorbing the hydrogen gas.

While various corrosion inhibitors can be utilised to inhibit corrosion or prevent the passage of hydrogen into the vacuum space as noted above, this increases the cost of using insulated tubing.

By using titanium or zirconium, each of which has a strong affinity for hydrogen gas, as a hydrogen getter in a vacuum space, hydrogen as well as other gases can be absorbed from the vacuum space to prolong the useful life of the insulated tubing apparatus.

The reaction of titanium as a hydrogen getter is as follows:

$$Ti(s)+H_2(g)\rightarrow TiH_2(s)$$

(s) signifies a solid and (g) signifies gas

The free energy of formation and the dissociation pressure of titanium hydride is shown as a function of temperature in Table II. The large negative value of free energy and the low dissociation pressure indicate that titanium can serve as an efficient hydrogen getter in the vacuum space of the insulated tube.

TABLE II:
Free energy of formation and dissociation pressure of titanium hydride as a function of temperature

| Temperature °C | (°F) | Free energy of Formation J | (cal) | Dissociation pressure of $TiH_2$ Pa | (Atm) |
|---|---|---|---|---|---|
| 27 | (80) | −104,950 | (−25,067) | $10^{-13.3}$ | ($10^{-18.3}$) |
| 127 | (260) | −120,770 | (−28,845) | $10^{-6.9}$ | ($10^{-11.9}$) |
| 204 | (400) | −87,140 | (−20,813) | $10^{-4.5}$ | ($10^{-9.5}$) |
| 227 | (440) | −77,531 | (−18,518) | $10^{-3.1}$ | ($10^{-8.1}$) |
| 327 | (620) | −63.405 | (−15,144) | $10^{-1.0}$ | ($10^{-6.0}$) |
| 343 | (650) | −44,292 | (−10,579) | $10^{-0.2}$ | ($10^{-5.2}$) |

Assuming the service life of the tubing apparatus 10 to be about five years, and to preserve a final vacuum within the annular space 16 of no more than 13.3 Pa (0.1 torr) including a hydrogen partial pressure no more than 1.33 Pa (0.01 torr), this space should first be evacuated to a level of 0.133 Pa ($10^{-3}$ torr) or less as noted above. Assuming hydrogen will contribute a partial pressure of about 533 Pa (four torr) and all of the gases will contribute about 13,332 Pa (100 torr) pressure, the use of a getter material within the annular space 16 should maintain the vacuum level at the end of the service life of the tube well below 13.3 Pa (0.1 torr) including a hydrogen partial pressure no more than 1.33 Pa (0.01 torr).

**Claims**

1. Apparatus for the delivery of hot fluids, for example to a well, the apparatus comprising:

an inner tubular member (14) having an inner space (28) for conveying fluids;

an outer tubular member (12) disposed around the inner tubular member and defining an annular space (16) therewith;

insulation (18; 22) disposed in the annular space (16);

means (24, 26) for connecting the inner and outer tubular members (14, 12), the annular space (16) being closed to atmospheric pressure and a vacuum being established in the closed annular space (16); and

a getter material (30) for absorbing at least one active gas in the closed annular space (16);

characterised in that:

the inner tubular member (14) is capable of conveying fluids at a temperature within a range of 204°C (400°F) to 371°C (700°F); and

the getter material (30) is activated at an elevated temperature within the temperature range and is disposed adjacent an outer surface (20) of the inner tubular member (14) between the outer surface (20) and the insulation (18; 22) in the closed annular space (16), the getter material (30) including one of a group consisting of titanium, an alloy of titanium, zirconium, and an alloy of zirconium.

2. Apparatus according to claim 1, including a metal strip (32) which carries the getter material, which metal strip surrounds and is adjacent the inner tubular member (14).

3. Apparatus according to claim 1 or claim 2, comprising means (34) for supplying fluid at a temperature between 204°C (400°F) and 371°C (700°F), which fluid supply means (34) is connected to the inner tubular member (14).

4. Apparatus according to claim 1, claim 2 or claim 3, wherein the inner tubular member (14) is made of material which releases at least one active gas by outgassing, which outgassing increases at elevated temperatures.

5. Apparatus according to claim 4, wherein the inner and outer tubular members (14, 12) are made of carbon steel, the inner tubular member (14) releasing a plurality of active gases by outgassing at a temperature within the temperature range, which gases are absorbed in use by the getter material (30).

6. Apparatus according to any one of the preceding claims, wherein the insulation comprises fibrous insulation (22) or layered insulation (18).

7. Apparatus according to any one of the preceding claims, wherein the connecting means comprises at least two connecting members (24, 26) spaced apart in an axial direction of the inner and outer tubular members (14, 12) and welded to the inner and outer tubular members, and the inner space (28) is capable of carrying steam.

8. A method of maintaining a vacuum in an annular space (16) of a tubular apparatus formed on an inner tubular member (14) for carrying fluids and an outer tubular member (12) connected to the inner tubular member by connector means (24, 26) to form the annular space (16) between the inner and outer tubular members (14, 12), the method comprising:

providing in the annular space (16) a getter material (30) for absorbing at least one active gas which permeates into the annular space (16);

providing insulation (18; 22) in the annular space (16); and

closing the annular space (16) to atmospheric pressure to establish a vacuum therein;

characterised in that:
the inner tubular member (14) is capable of conveying fluids at a temperature within a range of 204°C (400°F) to 371°C (700°F);
the getter material (30) is activatable at an elevated temperature within the temperature range to absorb active gases which pass into the annular space (16) through hydrogen permeation of the outer tubular member (12) due to corrosion of the outer tubular member and through outgassing of the inner tubular member (14) due to the elevated temperature of the inner tubular member;
the getter material (30) is disposed adjacent an outer surface (20) of the inner tubular member (14) between the outer surface (20) and the insulation (18; 22) in the closed annular space (16); and
the getter material (30) is selected from a group consisting of titanium, an alloy of titanium, zirconium, and an alloy of zirconium.

9. A method according to claim 8, wherein the step of providing a getter material (30) in the annular space (16) includes positioning a metal strip (32) carrying the getter material around and adjacent the inner tubular member (14).

10. A method according to claim 8 or claim 9, wherein the outer tubular member (12) is composed of carbon steel, the tubular apparatus is used in a corrosive environment of an oil well, the outer tubular member (12) is connected to the inner tubular member (14) at at least two axially spaced locations, and the inner tubular member (14) carries steam at a temperature within the temperature range.

**Patentansprüche**

1. Vorrichtung zur Förderung heißer Fluide, beispielsweise zu einem Schacht, mit
einem inneren röhrenförmigen Teil (14) mit einem Innenraum (28) zur Förderung von Fluiden,
einem äußeren röhrenförmigen Teil (12), das um das innere röhrenförmige Teil herum angeordnet ist und einen Ringraum (16) mit diesem begrenzt,
einer in dem Ringraum (16) angeordneten Isolierung (18, 22),
Einrichtungen (24, 26) zur Verbindung der inneren und äußeren röhrenförmigen Teile (14, 12), wobei der Ringraum (16) gegenüber Atmosphärendruck verschlossen ist und ein Vakuum in dem geschlossenen Ringraum (16) herrscht, und
einem Gettermaterial (30) zum Absorbieren wenigstens eines aktiven Gases in dem geschlossenen Ringraum (16),
dadurch gekennzeichnet, daß
das innere röhrenförmige Teil (14) Fluide mit einer Temperatur im Bereich von 204°C (400°F) bis 371°C (700°F) fördern kann und
das Gettermaterial (30) bei einer erhöhten Temperatur in dem Temperaturbereich aktiviert ist und zu einer Außenfläche (20) des inneren röhrenförmigen Teils (14) benachbart zwischen der Außenfläche (20) und der Isolierung (18, 22) in dem geschlossenen Ringraum (16) angeordnet ist, wobei das Gettermaterial (30) eines aus der Gruppe Titan, Titanlegierung, Zirkon und Zirkonlegierung enthält.

2. Vorrichtung nach Anspruch 1 mit einem Metallstreifen (32), der das Gettermaterial trägt, wobei dieser Metallstreifen das innere röhrenförmige Teil (14) umgibt und diesem benachbart ist.

3. Vorrichtung nach Anspruch 1 oder Anspruch 2, mit Einrichtungen (34) für die Zufuhr von Fluid mit einer Temperatur zwischen 204°C (400°F) und 371°C (700°F), wobei diese Fluidzufuhreinrichtung (34) mit dem inneren röhrenförmigen Teil (14) verbunden ist.

4. Vorrichtung nach Anspruch 1, Anspruch 2 oder Anspruch 3, bei der das innere röhrenförmige Teil (14) aus einem Material besteht, das wenigstens ein aktives Gas durch Entgasen abgibt, wobei dieses Entgasen bei erhöhten Temperaturen zunimmt.

5. Vorrichtung nach Anspruch 4, bei der die inneren und äußeren röhrenförmigen Teile (14, 12) aus Kohlenstoffstahl bestehen, wobei das innere röhrenförmige Teil (14) mehrere aktive Gase durch Entgasen bei einer Temperatur in dem Temperaturbereich abgibt und diese Gase bei der Verwendung durch gas Gettermaterial (30) absorbiert werden.

6. Vorrichtung nach einem der vorausgehenden Ansprüche, bei der die Isolation eine faserförmige Isolation (22) oder eine geschichtete Isolation (18) umfaßt.

7. Vorrichtung nach einem der vorausgehenden Ansprüche, bei der die Verbindungseinrichtungen wenigstens zwei Verbindungsteile (24, 26) aufweisen, die in axialer Richtung von den inneren und äußeren röhrenförmigen Teilen (14, 12) beabstandet sind und die mit den inneren und äußeren röhrenförmigen Teilen verschweißt sind, und daß der Innenraum (28) Wasserdampf führen kann.

8. Verfahren zur Aufrechterhaltung eines Vakuums in einem Ringraum (16) einer röhrenförmigen Vorrichtung, die von einem ineren röhrenförmigen Teil (14) zur Förderung von Fluiden und einem äußeren röhrenförmigen Teil (12), das mit dem inneren röhrenförmigen Teil mit Hilfe von Verbindungseinrichtung (24, 26) unter Bildung des Ringraumes (16) zwischen den inneren und äußeren röhrenförmigen Teilen (14, 12) verbunden ist, gebildet wird, wobei man bei diesem Verfahren
in dem Ringraum (16) ein Gettermaterial (30) zum Absorbieren wenigstens eines aktiven Gases vorsieht, das in den Ringraum (16) eindringt,
eine Isolierung (18, 22) in dem Ringraum (16) vorsieht und
den Ringraum (16) gegen Atmosphärendruck abschließt, um ein Vakuum darin zu erzeugen,
dadurch gekennzeichnet, daß
das innere röhrenförmige Teil (14) Fluide mit einer Temperatur im Bereich von 204°C (400°F) bis 371°C (700°F) fördern kann,
das Gettermaterial (30) bei einer erhöhten

Temperatur in dem Temperaturbereich aktivierbar ist, um aktive Gase zu absorbieren, die in den Ringraum (16) bei Eindringen von Wasserstoff durch das äußere röhrenförmige Teil (12) infolge einer Korrosion des äußeren röhrenförmigen Teils und durch Entgasen des inneren röhrenförmigen Teils (14) infolge der erhöhten Temperatur des inneren röhrenförmigen Teils gelangen,

das Gettermaterial (30) in Nachbarschaft zu einer Außenfläche (20) des inneren röhrenförmigen Teils (14) zwischen der Außenfläche (20) und der Isolierung (18, 22) in dem geschlossenen Ringraum (16) angeordnet ist und

das Gettermaterial (30) aus der Gruppe Titan, Titanlegierung, Zirkon und Zirkonlegierung ausgewählt ist.

9. Verfahren nach Anspruch 8, bei dem die Stufe des Vorsehens eines Gettermaterials (30) in dem Ringraum (16) die Anordnung eines Metallstreifens (32), der das Gettermaterial trägt, um das innere röhrenförmige Teil (14) und in Nachbarschaft zu diesem einschließt.

10. Verfahren nach Anspruch 8 oder Anspruch 9, bei dem das äußeren röhrenförmige Teil (12) aus Kohlenstoffstahl besteht, die röhrenförmige Vorrichtung in einer korrodierenden Umgebung einer Ölquelle verwendet wird, das äußere röhrenförmige Teil (12) mit dem inneren röhrenförmigen Teil (14) an wenigstens zwei axial voneinander beabstandeten Stellen verbunden ist und das innere röhrenförmige Teil (14) Wasserdampf mit einer Temperatur in dem Temperaturbereich führt.

**Revendications**

1. Dispositif pour le transport de fluides chauds, par exemple vers un puits, dispositif comprenant

un élément tubulaire intérieur (14) possédant un espace intérieur (28) pour transporter des fluides;

un élément tubulaire extérieur (12) disposé autour de l'élément tubulaire intérieur et définissant avec lui un espace annulaire (16);

une isolation (18; 22) disposée dans l'espace annulaire (16);

un moyen (24, 26) pour assembler les éléments tubulaires intérieur (14) et extérieur (12), l'espace annulaire (16) étant fermé à la pression atmosphérique, un vide étant établi dans l'espace annulaire fermé (16); et

un matériau sorbeur (30) pour absorber au moins un gaz actif se trouvant dans l'espace annulaire fermé (16);

caractérisé en ce que:

l'élément tubulaire intérieur (14) est capable de transporter des fluides à une température dans l'intervalle de 204°C (400°F) à 371°C (700°F); et

que la matériau sorbeur (30) est activé à une température élevée dans l'intervalle de températures et est disposé au voisinage immédiat d'une surface extérieure (20) de l'élément tubulaire intérieur (14) entre la surface extérieure (20) et l'isolation (18; 22) dans l'espace annulaire fermé (16), le matériau sorbeur (30) étant l'un des matériaux du groupe comprenant le titane, un alliage de titane, le zirconium et un alliage de zirconium.

2. Dispositif selon la revendication 1, comprenant une bande métallique (32) qui supporte le matériau sorbeur, laquelle bande métallique entoure l'élément tubulaire intérieur (14) et lui est contiguë.

3. Dispositif selon la revendication 1, ou la revendication 2, comprenant un moyen (34) pour alimenter un fluide à une température entre 204°C (400°F) et 371° (700°F), lequel moyen d'alimentation de fluide (34) est raccordé à l'élément tubulaire intérieur (14).

4. Dispositif selon la revendication 1, la revendication 2 ou la revendication 3, dans lequel l'élément tubulaire intérieur (14) est réalisé en un matériau qui libère par dégazage au moins un gaz actif, lequel dégazage augmente aux température élevées.

5. Dispositif selon la revendication 4, dans lequel les éléments tubulaires intérieur (14) et extérieur (12) sont réalisés en acier au carbone, l'élément tubulaire intérieur (14) libérant une pluralité de gaz actifs par dégazage à une température se trouvant dans l'intervalle de températures, lesquels gaz sont absorbés en cours d'utilisation par la matériau sorbeur (30).

6. Dispositif selon l'une quelconque des revendications précédentes, dans lequel l'isolation comprend une isolation fibreuse (22) ou une isolation stratifiée (18).

7. Dispositif selon l'une quelconque des revendications précédentes, dans lequel le moyen d'assemblage comprend au moins deux organes d'assemblage (24, 26) espacés l'un par rapport à l'autre dans une direction axiale des éléments tubulaires intérieur (14) et extérieur (12), et soudés aux éléments tubulaires intérieur et extérieur, et l'espace intérieur (28) est à même de transporter de la vapeur.

8. Procédé pour maimtenir un vide dans un espace annulaire (16) d'un dispositif tubulaire formé d'un élément tubulaire intérieur (14) pour transporter des fluides et d'un élément tubulaire extérieur (12) assemblé à l'élément tubulaire intérieur par un moyen de raccordement (24, 26) pour former l'espace annulaire (16) entre les éléments tubulaires intérieur (14) et extérieur (12), procédé consistant

à placer dans l'espace annulaire (16) un matériau sorbeur (30) pour absorber au moins un gaz actif qui pénètre dans l'espace annulaire (16)

à placer un isolation (18; 22) dans l'espace annulaire (16); et

à fermer l'espace annulaire (16) à la pression atmosphérique pour y établir un vide;

caractérisé en ce que

l'élément tubulaire intérieur (14) est capable de transporter des fluides à une température dans l'intervalle de 204°C (400°F) à 371°C (700°F);

le matériau sorbeur (30) peut être activé à des températures élevées dans l'intervalle de températures pour absorber les gaz actifs qui

passent dans l'espace annulaire (16) par un effet de pénération de l'hydrogène à travers l'élément tubulaire extérieur (12) du fait de la corrosion de l'élément tubulaire extérieur, et par un effet de dégazage de l'élément tubulaire intérieur (14) du fait de la température élevée de l'élément tubulaire intérieur;

le matériau sorbeur (30) est placé au voisinage immédiat d'une surface extérieure (20) de l'élément tubulaire intérieur (14) entre la surface extérieure (20) et l'isolation (18; 22) dans l'espace annulaire fermé (16); et

le matériau sorbeur (30) est choisi dans le groupe comprenant le titane, un alliage de titane, le zirconium et un alliage de zirconium.

9. Procédé selon la revendication 8, dans lequel l'étape consistant à placer un matériau sorbeur (30) dans l'espace annulaire (16) comprend la mise en place d'une bande métallique (32) supportant le matériau sorbeur, autour de l'élément tubulaire intérieur (14) et d'une manière contiguë à ce dernier.

10. Procédé selon la revendication 8 ou la revendication 9, dans lequel l'élément tubulaire extérieur (12) est constitué d'acier au carbone, le dispositif tubulaire est utilisé dans un environnement corrosif d'un puits de pétrole, l'élément tubulaire extérieur (12) est raccordé à l'élément tubulaire intérieur (14) en au moins deux points axialement espacés, et l'élément tubulaire intérieur (14) transporte de la vapeur à une température se trouvant dans l'intervalle de températures.

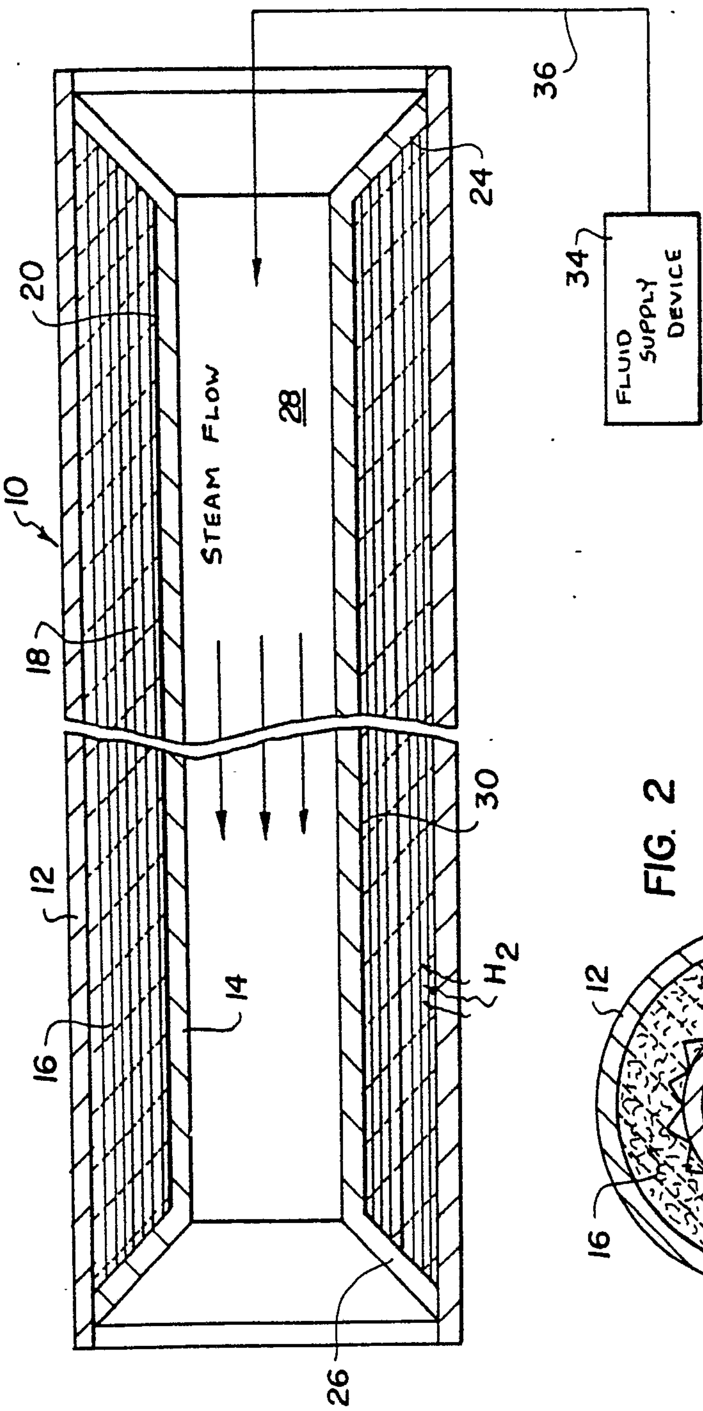
STEAM FLOW
28
FLUID SUPPLY DEVICE
$H_2$
10
12
14
16
18
20
24
26
30
34
36

FIG. 1

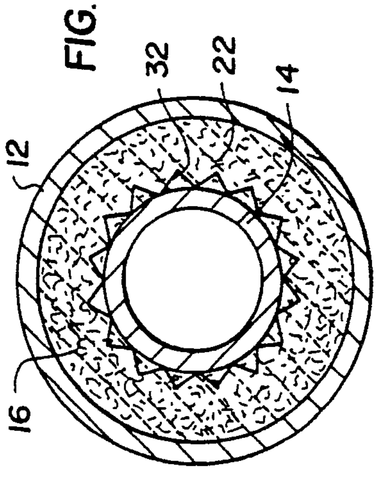
12
14
16
22
32

FIG. 2